# EUROPÄISCHE PATENTSCHRIFT

(11) **EP 0 975 507 B1**
(45) Veröffentlichungstag und Bekanntmachung des Hinweises auf die Patenterteilung: **17.09.2003**
(21) Anmeldenummer: 98928206.6
(22) Anmeldetag: 18.04.1998
(51) Int. Cl.: B62D 5/06

(54) **HILFSKRAFTLENKUNG MIT HYDRAULISCHER HILFSKRAFTUNTERSTÜTZUNG**
POWER STEERING WITH HYDRAULIC POWER ASSISTANCE
SERVO-DIRECTION A SERVO-ASSISTANCE HYDRAULIQUE

(30) Priorität: 26.04.1997 DE 19717796
(43) Veröffentlichungstag der Anmeldung: 02.02.2000
(73) Patentinhaber: ZF FRIEDRICHSHAFEN AG, 88038 Friedrichshafen (DE)
(72) Erfinder: ELSER, Dieter, D-73547 Essingen (DE); BRAUN, Andreas, D-73529 Schwäbisch Gmünd (DE); ZEITZ, Wolfgang, D-73527 Schwäbisch Gmünd (DE)
(74) Vertreter: Wiechmann, Manfred
(86) Internationale Anmeldenummer: EP9802301
(87) Internationale Veröffentlichungsnummer: WO98049043

(56) Entgegenhaltungen:
- DE-A- 4 207 719
- DE-C- 19 519 875
- US-A- 4 745 985
- US-A- 5 373 911

## Beschreibung

Die Erfindung betrifft eine Hilfskraftlenkung mit hydraulischer Hilfskraftunterstützung für Kraftfahrzeuge nach dem Oberbegriff des Anspruches 1. Dabei ist eine mit einem Lenkhandrad versehene Lenkspindel über eine Torsionsfeder mit einem Eingangsglied eines Lenkgetriebes verbunden. Ein Ausgangsglied des Lenkgetriebes ist mit zu lenkenden Rädern des Fahrzeuges verbunden. Zwei Arbeitsräume eines Servomotors einer Kraftverstärkungseinrichtung sind bei einer Relativverdrehung der Lenkspindel gegenüber dem Eingangsglied über ein Lenkventil von einer Servopumpe mit Druckmittel beaufschlagbar. Wenigstens ein Sensor zum Erfassen eines Drehwinkels und/oder eines Drehmomentes ist an der Lenkspindel angeordnet. Ein Sensor zum Erfassen eines Lenkwinkels ist an dem Ausgangsglied des Lenkgetriebes angeordnet. Dieser Sensor kann auch in der Drehwinkelsensorik der Lenkspindel integriert sein. Eine Rückstelleinrichtung dient zur hydraulischen Unterstützung der Rückstellung des Lenkgetriebes und der zu lenkenden Räder nach einem Loslassen des Lenkhandrades nach einem Lenkvorgang.

Eine derartige Hilfskraftlenkung ist bekannt aus der EP 0 440 638 B1. Hierbei ist zusätzlich zu einer kompletten Hilfskraftlenkung mit hydraulischer Hilfskraftunterstützung ein Elektromotor angeordnet, der dazu dient, die an dem Lenkhandrad spürbare Rückwirkungskraft in Abhängigkeit von verschiedenen Parametern zu beeinflussen. Außerdem dient der Elektromotor dazu, das Lenkventil genau in seiner Mitte zu zentrieren. Schließlich kann mit dem Elektromotor eine hydraulische Lenkachsrückstellung erreicht werden, indem nach dem Loslassen des Lenkhandrades das Lenkventil über seine Neutralstellung hinaus in eine Steuerstellung verstellt wird, die einer Lenkrichtungsumkehr entspricht.

Aus der US-A-4,745,985 ist ein Lenksystem bekannt, das verschiedene Merkmale des Oberbegriffes des Anspruches 1 enthält. Zusätzlich wird bei diesem Lenksystem die Größe und die Richtung der hydraulischen Hilfskraftunterstützung sowie die Rückstellung der zu lenkenden Räder über ein gemeinsames, elektronisch gesteuertes Elektromagnetventil gesteuert. Bei einem eventuellen Auftreten eines Fehlers in der elektronischen Steuereinrichtung können Lenkfehler auftreten, die zu einer Gefährdung führen können.

Der Erfindung liegt die Aufgabe zugrunde, die bei der bekannten Hilfskraftlenkung vorhandenen positiven Eigenschaften, wie genaue Ventilmittenzentrierung und hydraulische Lenkachsrückstellung, durch einfachere Mittel ohne Verwendung eines Elektromotors zu verwirklichen. Außerdem soll die Lenkbarkeit des Fahrzeugs auch beim Auftreten eines Fehlers im elektronischen System sichergestellt sein.

Diese Aufgabe wird durch die im Anspruch 1 gekennzeichnete Hilfskraftlenkung dadurch gelöst, daß sowohl die Größe und die Richtung der hydraulischen Hilfskraftunterstützung als auch die Rückstellung der zu lenkenden Räder über ein gemeinsames, elektronisch gesteuertes Elektromagnetventil gesteuert werden. Das Elektromagnetventil kann in der eigentlichen Hilfskraftlenkung integriert oder aber außerhalb an einer beliebigen Stelle angeordnet sein. Die Hilfskraft für die hydraulische Hilfskraftunterstützung wird ausschließlich von der Servopumpe geliefert. Ein Elektromotor wird nicht benötigt.

Um bei einem evtl. Auftreten eines Fehlers eine Gefährdung auszuschließen, wird zwischen der Lenkspindel und dem Eingangsglied des Lenkgetriebes ein Kurzschlußventil angeordnet. An dieser Stelle sitzt sonst bei bekannten Hilfskraftlenkungen das Lenkventil. Das Kurzschlußventil ist als Drehschieberventil mit geschlossener Mitte ausgebildet, so daß in dessen Neutralstellung keine Verbindung zwischen den beiden Arbeitsräumen des Servomotors möglich ist. Erst beim Auftreten eines Fehlers wird das Kurzschlußventil in seine geöffnete Stellung umgeschaltet, so daß die beiden Arbeitsräume des Servomotors miteinander verbunden sind. Die beiden Arbeitsräume sind dann kurzgeschlossen, so daß kein Druckaufbau in dem Servomotor erfolgen kann. Die Lenkenergie entsteht in diesem Fall ausschließlich durch die mechanische Betätigung des Lenkhandrades.

Vorteilhafte und zweckmäßige Ausgestaltungen der Erfindung sind in den Unteransprüchen angegeben.

Das Elektromagnetventil kann über eine Elektronik-Einheit auf einfache Art und Weise in Abhängigkeit von wenigstens einem Parameter, wie beispielsweise der Fahrgeschwindigkeit des Fahrzeugs, der Lenkgeschwindigkeit, der Giergeschwindigkeit, der Beladung des Fahrzeugs, der Beschleunigung des Fahrzeugs und anderen, gesteuert werden.

Durch entsprechende Programmierung der Elektronik-Einheit und entsprechende Sensorik kann das Elektromagnetventil durch Signale gesteuert werden, die Auskunft geben über die derzeitige Position des Fahrzeugs und über gewünschte, zukünftige Positionen. Damit ist die Option für ein automatisches Lenken in der Hilfskraftlenkung enthalten.

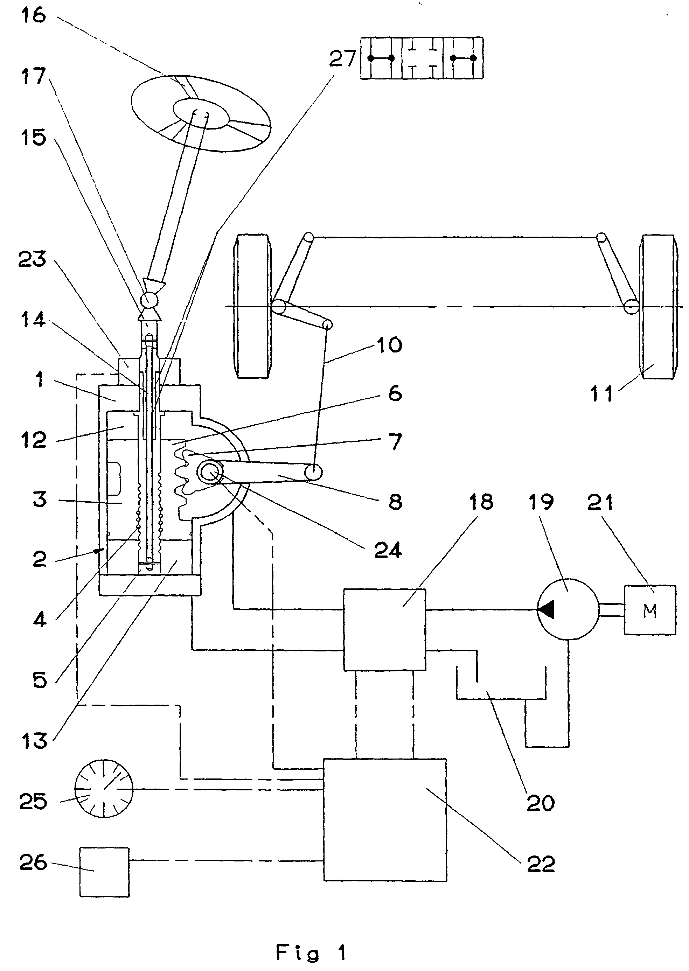

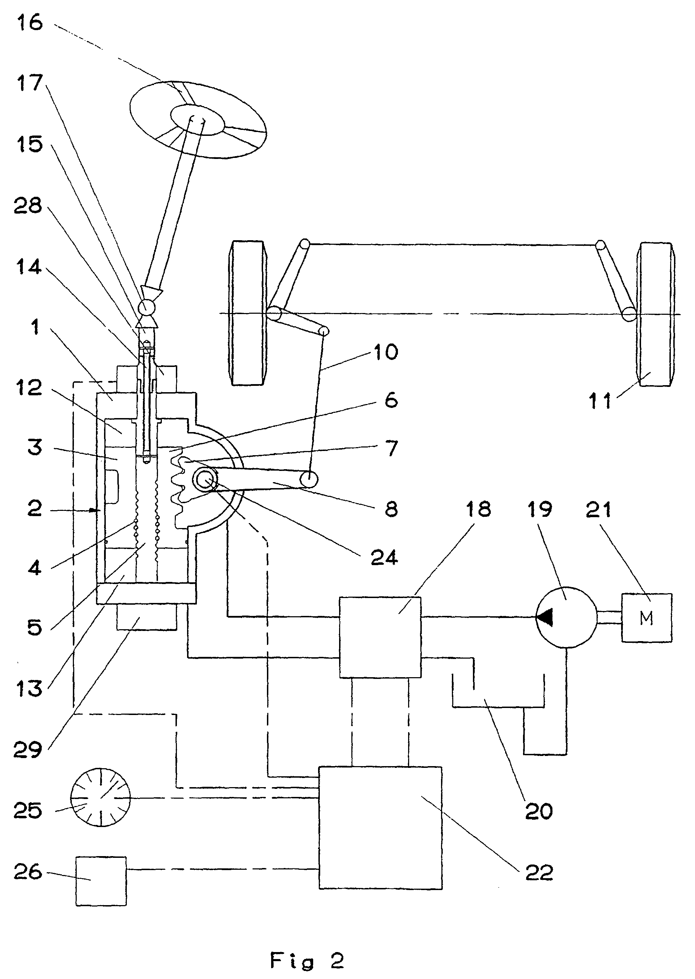

Im folgenden wird die Erfindung anhand zweier in den Fig. 1 und 2 dargestellter Ausführungsbeispiele näher erläutert.

Die Erfindung wird am Beispiel einer Kugelmutter-Hilfskraftlenkung erläutert. Mit gleicher Wirkung kann die Erfindung jedoch auch auf Zahnstangen-Hilfskraftlenkungen angewendet werden.

In einem Lenkgehäuse 1 enthält ein Lenkgetriebe 2 einen Arbeitskolben 3, der über eine Kugelreihe 4 mit einer Gewindespindel 5 und über eine Verzahnung 6 mit einer Segmentwelle 7 trieblich verbunden ist. Dabei bildet die Gewindespindel 5 ein Eingangsglied des Lenkgetriebes 2 und die Segmentwelle 7 ein Ausgangsglied des Lenkgetriebes 2.

Von der Segmentwelle 7 besteht über einen Lenkstockhebel 8 und ein Lenkgestänge 10 eine Verbindung zu wenigstens zwei zu lenkenden Rädern 11 des Kraftfahrzeuges.

Das Gehäuse 1 bildet zwei zylindrische Arbeitsräume 12 und 13, die durch den Arbeitskolben 3 voneinander getrennt sind.

Die Gewindespindel 5 als Eingangsglied des Lenkgetriebes 2 ist über eine Torsionsfeder 14 mit einer Lenkspindel 15 verbunden, die ein Lenkhandrad 16 trägt. Die Lenkspindel 15 kann durch ein Kreuzgelenk 17 unterteilt sein.

Die beiden Arbeitsräume 12 und 13 sind über ein Elektromagnetventil 18, beispielsweise ein Proportionalventil, mit Druckmittel beaufschlagbar, das eine Servopumpe 19 aus einem Behälter 20 fördert. Die Servopumpe 19 wird beispielsweise von einem Fahrzeugmotor 21 oder einem Elektromotor angetrieben.

Das Elektromagnetventil 18 kann mit offener oder mit geschlossener Mitte ausgeführt sein. Bei einer Ausführung mit geschlossener Mitte ist zusätzlich zu der Servopumpe 19 ein nicht dargestellter Druckmittelspeicher angeordnet.

Das Elektromagnetventil 18 wird durch eine Elektronik-Einheit 22 geregelt. Die Elektronik-Einheit 22 bekommt Signale von wenigstens einem ersten Sensor 23 zum Erfassen eines Drehwinkels und/oder eines Drehmomentes, der an der Lenkspindel 15 angeordnet ist. Ein zweiter Sensor 24 zum Erfassen eines Lenkwinkels ist an dem Ausgangsglied, der Segmentwelle 7, des Lenkgetriebes 2 angeordnet und liefert die entsprechenden Signale an die Elektronik-Einheit 22. Mit gleicher Wirkung kann der Sensor auch an dem Eingangsglied des Lenkgetriebes 2 angeordnet sein. Weitere Signale, die Parameter für den jeweiligen Zustand des Fahrzeugs wiedergeben, werden beispielsweise von einem elektronischen Tachometer 25 und einem Giergeschwindigkeitssensor 26 der Elektronik-Einheit 22 zugeführt.

In dem Ausführungsbeispiel nach Fig. 1 ist aus Sicherheitsgründen zwischen der Lenkspindel 15 und dem Eingangsglied des Lenkgetriebes 2, d. h. der Gewindespindel 5, ein Kurzschlußventil 27 eingesetzt. Das Kurzschlußventil 27 ist als Drehschieberventil mit geschlossener Mitte ausgebildet. Dies ist in Fig. 1 symbolisch angedeutet. Bei einer Relativverdrehung zwischen der Lenkspindel 15 und der Gewindespindel 5, bei der die Torsionsfeder 14 in Abhängigkeit von dem aufgebrachten Lenkmoment verdreht wird, kann das Kurzschlußventil 27 bei einer Betätigungskraft von knapp unter 450 N öffnen. Eine solche Betätigungskraft ist beim Auftreten eines Fehlers in einer Hilfskraftlenkung entsprechend einer EWG-Richtlinie zulässig. Dieses Kurzschlußventil 27 wird ähnlich wie ein Drehschieberventil einer "normalen" Hilfskraftlenkung mechanisch betätigt und ist deshalb sehr sicher. Durch das Öffnen des Kurzschlußventils 27 werden die Arbeitsräume 12 und 13 miteinander verbunden, so daß dann kein Druckaufbau in den Arbeitsräumen 12 und 13 des Lenkgetriebes 2 erfolgen kann. Das Lenkgetriebe 2 wird in diesem Fall ausschließlich durch die Handkraft am Lenkhandrad verstellt.

Durch entsprechende Programmierung der Elektronik-Einheit 22 kann die Hilfskraftlenkung für automatisches Lenken ausgelegt werden. Von einer nicht dargestellten, außerhalb des Fahrzeugs angeordneten Leiteinrichtung können Signale an die Elektronik-Einheit 22 übertragen werden. Die Leiteinrichtung kann beispielsweise mit einem Induktionskabel in der Straße ausgestattet sein. Auch eine Videoorientierung oder eine Satellitensteuerung ist möglich. Die Signale geben Auskunft über die derzeitige Position des Fahrzeugs und über gewünschte, zukünftige Positionen. Von der Elektronik-Einheit 22 werden dann die Soll-/Istwert-Abweichungen erfaßt und entsprechend korrigierte Steuerbefehle an das Elektromagnetventil 18 weitergegeben. Der Fahrer kann durch Eingreifen am Lenkhandrad 16 die Funktion der automatischen Lenkung außer Kraft setzen.

Bei dem zweiten Ausführungsbeispiel nach Fig. 2 ist das Kurzschlußventil in dem Elektromagnetventil 18 integriert. Das Kurzschlußventil ist in diesem Fall gemeinsam mit dem Elektromagnetventil 18 elektronisch ansteuerbar.

In diesem Ausführungsbeispiel ist der erste Sensor als Drehwinkelsensor 28 ausgebildet. Ein weiterer Drehwinkelsensor 29 ist am unteren Ende des Lenkgehäuse 1 gekoppelt mit der Gewindespindel 5 angebaut. Durch diesen weiteren Drehwinkelsensor 29 kann die Winkelauflösung des an der Segmentwelle 7 angeordneten zweiten Sensors 24 verbessert werden.

Die übrigen Bauelemente des Ausführungsbeispieles 2 entsprechen denen des Ausführungsbeispieles 1 und sind mit gleichen Bezugszeichen bezeichnet.

Eine Lenkbewegung am Lenkhandrad 16 wird von dem Drehwinkelsensor 28 an der Lenkspindel 15 erfaßt. Die Lenkbewegung wird weitergeleitet von der Lenkspindel 15 über die Torsionsfeder 14, die hierbei in Abhängigkeit von dem Betätigungsmoment verdreht wird. Die Torsionsfeder 14 ist an ihrer anderen Seite fest mit der Gewindespindel 5 verbunden.

Eine Verdrehung der Torsionsfeder 14 bewirkt eine Veränderung der Beziehung des oberen Drehwinkelsensors 28 zu dem zweiten Sensor 24 an der Segmentwelle 7. Diese relative Winkeländerung wird von der Elektronik-Einheit 22 ausgewertet. Die Elektronik-Einheit 22 steuert dann einen Ölstrom von der Pumpe 19 über das Elektromagnetventil 18 drehrichtungsgerecht den entsprechenden Arbeitsräumen 12 bzw. 13 zu. Da der zweite Sensor 24 an der Segmentwelle 7 nur etwa 90 Grad Gesamtwinkelausschlag aufweist und dadurch die Auflösung des Sensors relativ unpräzise ist, müßte ihm ein Übersetzungsgetriebe vorgeschaltet werden. An die Stelle eines solchen aufwendigen Übersetzungsgetriebes tritt der Drehwinkelsensor 29, der zusammen mit der Gewindespindel 5 umläuft.

Sowohl die beiden Drehwinkelsensoren 28 und 29 als auch der erste und der zweite Sensor 23, 24 an der Segmentwelle 7 und die Elektronik-Einheit 22 sind redundant ausgelegt. Durch die Redundanz im Bereich der Sensoren und der Elektronik-Einheit ist es möglich, Fehler zu erkennen und die hydraulische Unterstützung des Lenkgetriebes 2 über das in dem Elektromagnetventil 18 integrierte, elektronisch ansteuerbare Kurzschlußventil zu inaktivieren.

### Bezugszeichen

- 1: Lenkgehäuse
- 2: Lenkgetriebe
- 3: Arbeitskolben
- 4: Kugelreihe
- 5: Gewindespindel
- 6: Verzahnung
- 7: Segmentwelle
- 8: Lenkstockhebel
- 9: -
- 10: Lenkgestänge
- 11: Rad
- 12: Arbeitsraum
- 13: Arbeitsraum
- 14: Torsionsfeder
- 15: Lenkspindel
- 16: Lenkhandrad
- 17: Kreuzgelenk
- 18: Elektromagnetventil
- 19: Servopumpe
- 20: Behälter
- 21: Fahrzeugmotor
- 22: Elektronik-Einheit
- 23: erster Sensor
- 24: zweiter Sensor
- 25: Tachometer
- 26: Giergeschwindigkeitssensor
- 27: Kurzschlußventil
- 28: Drehwinkelsensor
- 29: Drehwinkelsensor

## Patentansprüche

1. Hilfskraftlenkung mit hydraulischer Hilfskraftunterstützung für Kraftfahrzeuge mit folgenden Merkmalen:
- Eine mit einem Lenkhandrad (16) versehene Lenkspindel (15) ist über eine Torsionsfeder (14) mit einem Eingangsglied eines Lenkgetriebes (2) verbunden,
- ein Ausgangsglied des Lenkgetriebes (2) ist mit zu lenkenden Rädern (11) des Kraftfahrzeugs verbunden,
- zwei Arbeitsräume (12, 13) eines Servomotors einer Kraftverstärkungseinrichtung sind bei einer Relativverdrehung der Lenkspindel (15) gegenüber dem Eingangsglied über ein Lenkventil von einer Servopumpe (19) mit Druckmittel beaufschlagbar,
- wenigstens ein Sensor (23) zum Erfassen eines Drehwinkels und/oder eines Drehmomentes ist an der Lenkspindel (15) angeordnet,
- ein Sensor (24) zum Erfassen eines Lenkwinkels ist an einem Teil des Lenkgetriebes (2), insbesondere an dem Ausgangs- oder dem Eingangsglied, angeordnet,
- eine Rückstelleinrichtung dient zur hydraulischen Unterstützung der Rückstellung des Lenkgetriebes (2) und der zu lenkenden Räder (11) nach einem Loslassen des Lenkhandrades (16) nach einem Lenkvorgang,
**dadurch gekennzeichnet, daß** sowohl die Größe und die Richtung der hydraulischen Hilfskraftunterstützung als auch die Rückstellung der zu lenkenden Räder (11) über ein gemeinsames, elektronisch gesteuertes Elektromagnetventil (18) gesteuert werden und daß zwischen der Lenkspindel (15) und dem Eingangsglied des Lenkgetriebes (2) ein Kurzschlußventil (27) angeordnet ist, in dessen geöffneter Stellung die beiden Arbeitsräume (12, 13) des Servomotors miteinander verbunden sind.

2. Hilfskraftlenkung nach Anspruch 1, **dadurch gekennzeichnet, daß** das Kurzschlußventil (27) als Drehschieberventil mit geschlossener Mitte ausgebildet ist.

3. Hilfskraftlenkung nach Anspruch 1 oder 2, **dadurch gekennzeichnet, daß** das Kurzschlußventil (27) als Sicherheitsventil mechanisch betätigbar ausgebildet ist.

4. Hilfskraftlenkung nach einem der Ansprüche 1 bis 3, **dadurch gekennzeichnet ,daß** das Elektromagnetventil (18) über eine Elektronik-Einheit (22) in Abhängigkeit von wenigstens einem Parameter, wie Fahrgeschwindigkeit des Fahrzeugs, Lenkgeschwindigkeit, Giergeschwindigkeit, Beladung des Fahrzeugs und anderen, steuerbar ist.

5. Hilfskraftlenkung nach einem der Ansprüche 1 bis 4, **dadurch gekennzeichnet ,daß** das Elektromagnetventil (18) über die Elektronik-Einheit (22) in Abhängigkeit von Signalen steuerbar ist, die Auskunft geben über die derzeitige Position des Fahrzeugs und über gewünschte, zukünftige Positionen.

6. Hilfskraftlenkung nach Anspruch 5, **dadurch gekennzeichnet, daß** die Signale von einer außerhalb des Fahrzeugs angeordneten Leiteinrichtung an die Elektronik-Einheit (22) des Fahrzeugs übertragen werden.

7. Hilfskraftlenkungnach einem der Ansprüche 1 bis 6, **dadurch gekennzeichnet, daß** das Elektromagnetventil (18) ein Ventil mit geschlossener Mitte ist und daß zusätzlich zu der Servopumpe ein Druckmittelspeicher angeordnet ist.

8. Hilfskraftlenkung nach Anspruch 1, **dadurch gekennzeichnet, daß** das Kurzschlußventil in dem Elektromagnetventil (18) elektronisch ansteuerbar integriert ist.

9. Hilfskraftlenkungnach Anspruch 1, **dadurch gekennzeichnet, daß** zusätzlich zu dem an der Lenkspindel (15) angeordneten Sensor (23) zum Erfassen eines Drehwinkels und/oder eines Drehmomentes ein weiterer derartiger Sensor an dem Eingangsglied des Lenkgetriebes (2) angeordnet ist.

10. Hilfskraftlenkung nach einem der Ansprüche 1 bis 9, **dadurch gekennzeichnet, daß** die Sensoren (23, 24, 28, 29) und die Elektronik-Einheit (22) redundant ausgeführt sind.

11. Hilfskraftlenkung nach einem der Ansprüche 1 bis 10, **dadurch gekennzeichnet, daß** das Elektromagnetventil (18) ein Proportionalventil ist.

## Claims

1. Power steering system with hydraulic power assistance for motor vehicles having the following features:
- a steering spindle (15) which is provided with a steering wheel (16) is connected to an input element of a steering gear (2) via a torsion spring (14),
- an output element of the steering gear (2) is connected to wheels (11) of the motor vehicle which are to be steered,
- when there is a relative rotation of the steering spindle (15) with respect to the input element, two working spaces (12, 13) of a servomotor of a booster device can have pressure medium applied to them by a servo pump (19) via a steering valve,
- at least one sensor (23) for sensing a steering angle and/or a steering torque is arranged on the steering spindle (15),
- a sensor (24) for sensing a steering angle is arranged on part of the steering gear (2), in particular on the output element or the input element,
- a restoring device serves to hydraulically support the resetting of the steering gear (2) and of the wheels (11) which are to be steered, after the steering wheel (16) is released after a steering process,
**characterized in that** both the magnitude and the direction of the hydraulic power assistance and the resetting of the wheels (11) which are to be steered are controlled by a common, electronically controlled solenoid valve (18), and **in that** a short-circuit valve (27) is arranged between the steering spindle (15) and the input element of the steering gear (2), and the two working spaces (12, 13) of the servomotor are connected to one another in the opened position of said short-circuit valve (27).

2. Power steering system according to Claim 1, **characterized in that** the short-circuit valve (27) is embodied as a rotary slide valve with closed centre.

3. Power steering system according to Claim 1 or 2, **characterized in that** the short-circuit valve (27) is embodied so as to be capable of being mechanically actuated as a safety valve.

4. Power steering system according to one of Claims 1 to 3, **characterized in that** the solenoid valve (18) can be controlled by means of an electronic unit (22) as a function of at least one parameter, such as travel speed of the vehicle, steering speed, yaw rate, load of the vehicle and other parameters.

5. Power steering system according to one of Claims 1 to 4, **characterized in that** the solenoid valve (18) can be controlled by means of the electronic unit (22) as a function of signals which provide information on the current position of the vehicle and on desired future positions.

6. Power steering system according to Claim 5, **characterized in that** the signals are transmitted to the electronic unit (22) of the vehicle by a guidance device which is arranged outside the vehicle.

7. Power steering system according to one of Claims 1 to 6, **characterized in that** the solenoid valve (18) is a valve with a closed centre, and **in that** a pressure medium store is arranged in addition to the servo pump.

8. Power steering system according to Claim 1, **characterized in that** the short-circuit valve is integrated so as to be capable of being actuated electronically in the solenoid valve (18).

9. Power steering system according to Claim 1, **characterized in that**, in addition to the sensor (23) which is arranged on the steering spindle (15) and has the purpose of sensing a steering angle and/or a steering torque, a further such sensor is arranged on the input element of the steering gear (2).

10. Power steering system according to one of Claims 1 to 9, **characterized in that** the sensors (23, 24, 28, 29) and the electronic unit (22) are of redundant design.

11. Power steering system according to one of Claims 1 to 10, **characterized in that** the solenoid valve (18) is a proportional valve.

## Revendications

1. Servo-direction à servo-assistance hydraulique pour véhicules automobiles possédant les caractéristiques suivantes :
- un arbre de direction (15) muni d'un volant de direction (16) est relié à un élément d'entrée d'un engrenage de direction (2) par le biais d'un ressort à torsion (14),
- un élément de sortie de l'engrenage de direction (2) est relié aux roues à diriger (11) du véhicule automobile,
- deux espaces de travail (12, 13) d'un servomoteur d'un dispositif amplificateur de force peuvent être exposés à un fluide sous pression en provenance d'une pompe d'asservissement (19) par le biais d'une vanne de direction lors d'une rotation relative de l'arbre de direction (15) par rapport à l'élément d'entrée,
- au moins un capteur (23) est monté sur l'arbre de direction (15) pour détecter un angle de rotation et/ou un couple de rotation,
- un capteur (24) destiné à détecter un angle de direction est monté sur une partie de l'engrenage de direction (2), notamment sur l'élément de sortie ou d'entrée,
- un dispositif de rappel sert à l'assistance hydraulique du rappel de l'engrenage de direction (2) et des roues à diriger (11) après avoir relâché le volant de direction (16) après une opération de changement de direction,
**caractérisée en ce qu'**à la fois la grandeur et la direction de la servo-assistance hydraulique ainsi que le rappel des roues à diriger (11) sont commandés par le biais d'une électrovanne (18) commune à commande électronique et qu'entre l'arbre de direction (15) et l'élément d'entrée de l'engrenage de direction (2) est disposée une vanne de court-circuit (27) dans la position ouverte de laquelle les deux espaces de travail (12, 13) du servomoteur sont reliés entre eux.

2. Servo-direction selon la revendication 1, **caractérisée en ce que** la vanne de court-circuit (27) est réalisée sous la forme d'une vanne rotative avec position centrale fermée.

3. Servo-direction selon la revendication 1 ou 2, **caractérisée en ce que** la vanne de court-circuit (27) est réalisée sous la forme d'une soupape de sûreté à commande mécanique.

4. Servo-direction selon l'une des revendications 1 à 3, **caractérisée en ce que** l'électrovanne (18) peut être commandée par le biais d'un module électronique (22) en fonction d'au moins un paramètre tel que la vitesse de déplacement du véhicule, la vitesse de changement de direction, la vitesse de lacet, la charge du véhicule et autre.

5. Servo-direction selon l'une des revendications 1 à 4, **caractérisée en ce que** l'électrovanne (18) peut être commandée par le biais du module électronique (22) en fonction de signaux qui fournissent des renseignements sur la position actuelle du véhicule et sur les futures positions souhaitées.

6. Servo-direction selon la revendication 5, **caractérisée en ce que** les signaux sont transmis au module électronique (22) du véhicule depuis un dispositif de guidage disposé à l'extérieur du véhicule.

7. Servo-direction selon l'une des revendications 1 à 6, **caractérisée en ce que** l'électrovanne (18) est une vanne à position centrale fermée et qu'un réservoir de fluide sous pression est installé en plus de la pompe d'asservissement.

8. Servo-direction selon la revendication 1, **caractérisée en ce que** la vanne de court-circuit est intégrée dans l'électrovanne (18) en pouvant être commandée de manière électronique.

9. Servo-direction selon la revendication 1, **caractérisée en ce qu'**en plus du capteur (23) monté sur l'arbre de direction (15) pour détecter un angle de rotation et/ou un couple de rotation, un capteur supplémentaire de ce type est monté sur l'élément d'entrée de l'engrenage de direction (2).

10. Servo-direction selon l'une des revendications 1 à 9, **caractérisée en ce que** les capteurs (23, 24, 28, 29) et le module électronique (22) sont réalisés avec redondance.

11. Servo-direction selon l'une des revendications 1 à 10, **caractérisée en ce que** l'électrovanne (18) est une vanne proportionnelle.
